# EUROPEAN PATENT SPECIFICATION

(11) **EP 4 496 165 B1**
(45) Date of publication and mention of the grant of the patent: **16.09.2026**
(21) Application number: 22931796.1
(22) Date of filing: 16.11.2022
(51) Int. Cl.: B60M 3/00, H02J 3/06, H02J 13/12

(54) **INTELLIGENT TRACTION SUBSTATION AND POWER FLOW CONTROL METHOD THEREFOR**
INTELLIGENTE TRAKTIONSUNTERSTATION UND LEISTUNGSFLUSSSTEUERUNGSVERFAHREN DAFÜR
SOUS-STATION DE TRACTION INTELLIGENTE ET PROCÉDÉ DE COMMANDE DE FLUX DE PUISSANCE ASSOCIÉ

(30) Priority: 17.03.2022 CN 202210261839
(43) Date of publication of application: 22.01.2025
(73) Proprietor: Southwest Jiaotong University, Sichuan 610031 (CN)
(72) Inventor: LI, Qunzhan, Chengdu, Sichuan 610031 (CN); HUANG, Xiaohong, Chengdu, Sichuan 610031 (CN); XIE, Shaofeng, Chengdu, Sichuan 611756 (CN); GUO, Kai, Chengdu, Sichuan 610031 (CN); YI, Dong, Chengdu, Sichuan 610031 (CN); YANG, Naiqi, Chengdu, Sichuan 611756 (CN)
(74) Representative: SSM Sandmair
(86) International application number: PCT/CN2022/132269
(87) International publication number: WO 2023/173784

(56) References cited:
- CN-A- 103 552 488
- CN-A- 109 066 718
- CN-A- 110 829 435
- CN-A- 112 350 342
- CN-A- 112 350 342
- CN-A- 114 336 639
- US-A1- 2014 160 811
- CHUANPING WU ET AL: "A Negative Sequence Compensation Method Based on a Two-Phase Three-Wire Converter for a High-Speed Railway Traction Power Supply System", IEEE TRANSACTIONS ON POWER ELECTRONICS, INSTITUTE OF ELECTRICAL AND ELECTRONICS ENGINEERS, USA, vol. 27, no. 2, 1 February 2012 (2012-02-01), pages 706 - 717, XP011391782, ISSN: 0885-8993, DOI: 10.1109/TPEL.2011.2159273
- XIANG, JIAJIANG: "Discussion on Application of Co-phase Power Supply Scheme of Chongqing Urban Rail Express Line", ELECTRIC ENGINEERING, no. 07, 10 April 2020 (2020-04-10), pages 58 - 62, XP009548723, ISSN: 1002-1388
- HUANG, XIAOHONG ET AL.: "Control Strategy of Co-phase Traction Power Supply System and Simulative Analysis", ELECTRIC POWER AUTOMATION EQUIPMENT, vol. 34, no. 01, 10 January 2014 (2014-01-10), pages 43 - 47, XP009548726, ISSN: 1006-6047

## Description

### Field of the Invention

The present invention relates to the technical field of alternating current electrified railway traction power supply, in particular to an intelligent traction substation and a power flow control method therefor.

### Background of the Invention

The electrical phase separation of an electrified railway is a notable weak link with the overall traction power supply system. The neutral zone of the electrical phase separation forms a dead zone, resulting in a disruption to the power supply. Although the dead zone typically spans only a few tens of meters, the distance over which power is cut off as trains automatically pass through this section can exceed 500 meters. This significantly impedes the smooth operation of trains and even causes trains to stall on slopes, potentially leading to accidents. The electrified railways employ co-phase power supply to eliminate the electrical phase separation within traction substations, and employ a two-way feeding power supply system to eliminate the electrical phase separation within sections. The co-phase power supply and the two-way feeding power supply system are employed so as to remove the dead zone, ensure an uninterrupted power supply of trains, and meanwhile eliminate the hidden danger caused by passing through the neutral zone. In addition, the effective extension of the power supply arm is conductive to balancing peak and off-peak loads, stabilizing traction load fluctuations, and improving the direct utilization rate of regenerative braking energy. This contributes to saving power supply resources, and reducing the basic electricity bill, and is also conductive to solving the power quality problem dominated by negative sequence, offering the advantages of high power supply reliability, improved network voltage level, increased power supply capacity and reduced power loss.

Usually, the traction network with the two-way feeding power supply system forms a parallel structure with the power grid through traction substations on both sides. When the traction network is unloaded, power flow and current flow through the traction network, wherein the corresponding power flow is known as ride-through power flow (the corresponding current is known as equalizing current). At this time, the ride-through power flow flows into the traction network from the traction substation on one side and flows out of the traction network from the traction substation on the other side. That is, the traction substation through which the ride-through power flow flows into the traction network from the power grid is in a load (power consumption) state, and the traction substation through which the ride-through power flow flows into the power grid from the traction network is in a power generation state. It is precisely because two-way feeding power supply system alters the structure of the power grid that two key technical problems need to be solved in implementing the two-way feeding power supply system.

The first problem concerns the relay protection of the power grid and the traction network. In order to achieve the relay protection, it is required to have a greater protection range and the capability to trip the traction network in case of power grid failure to block power flow transmission. Therefore, it is necessary to equip the power grid with transmission line protection and equip the traction network with section protection.

The second problem concerns the impact of the ride-through power flow on the power grid and metering. If the ride-through power flow returns to the power grid, it is equivalent to power generation of the traction substation. If the returned power flow is metered in reverse, that is to say, it will be treated as power generation, it can offset with the consumed power of another traction substation, so there will be no economic loss for the user. If the returned power flow is not metered or the returned power flow is metered in positive when the ride-through power flow returns to the power grid, it will result in economic losses to users. In this case, it is necessary to study how to reduce the ride-through power flow by the two-way feeding power supply system, or how to make use of the ride-through power flow so as to reduce the impact on the power grid and users and improve the power consumption efficiency while leveraging the advantages of the two-way feeding power supply system.

The prior art proposes some suppression methods for the ride-through power flow. One of the methods involves reducing the equalizing current by connecting a reactor in series to the secondary side of the traction transformer in the traction substation, such as the Chinese patent "Two-way Feeding Power Supply System for Electrified Railway" (Patent No.: CN103552488B). However, its disadvantages lie in that the reactor required is relatively large, and it is required to adjust the power factor of the train to a leading state. Otherwise, the power supply voltage and power supply capacity will be affected. Theoretically, unless the impedance of the secondary side of the traction transformer approaches infinity, the ride-through power flow or the equalizing current cannot reach zero.

Now, shifting the focus away from the research on the suppression technology for the ride-through power flow generated by two-way feeding power supply, we can change our thought and propose an intelligent traction substation and a power flow control method therefor, so as to implement the co-phase two-way continuous power supply for electrified railways, thereby eliminating the electrical phase separation and the dead zone. At the same time, the ride-through power flow, from the two-way feeding power supply, returned to the power grid and the regenerative energy generated by the braking of electric locomotives on the traction network serve as the generated power flow for utilization. Therefore, the generated power flow returned to the power grid can satisfy the preset requirements, such as being 0, and the excessive negative sequence is compensated such that the negative sequence meets the national standards.

Document CN 110829435 A discloses an electrified railway energy storage type traction power supply system and a control method thereof. The system comprises a power flow controller, an energy storage system and a single-phase main traction transformer. The power flow controller comprises a high-voltage matching transformer, a grid side AC/DC converter, a traction side AC/DC converter, an intermediate DC side capacitor and a traction matching transformer. The energy storage system comprises a bidirectional DC/DC converter and an energy storage element, and the energy storage element is connected in parallel to the intermediate DC side capacitor through the bidirectional DC/DC converter. The control method comprises the following steps: collecting voltage and current data of a load at the outlet of a substation, judging the operation condition of the system, and calculating the compensation power of the ports of the power flow controller and the energy storage device under each condition; adding the compensation power into double-loop control of a power outer loop and a current inner loop to obtain a modulation signal; and generating a switching signal of a control device through PWM modulation. Recovery and reutilization of the regenerative braking energy of trains are achieved, the utilization rate of the regenerative braking energy is increased, and negative-sequence electric energy quality treatment and compensation device capacity optimization are achieved.

Document CN 112350342 A discloses a rail transit hybrid power supply system and an unbalance degree control method, and relates to the technical field of electrified railway power supply. The system comprises an in-phase traction power supply system, a power illumination power supply system and a measurement and control device, the high-voltage sides of the in-phase traction power supply system and the power illumination power supply system are connected to a three-phase bus, and the measurement and control device is used for detecting the three-phase voltage unbalance degree of the three-phase bus and the three-phase current unbalance degree of a moving illumination feeder line at an inlet of the power illumination power supply system, and controlling the in-phase traction power supply system to perform negative sequence compensation according to a detection result. The system has the function of supplying power to locomotive loads and power lighting equipment at the same time, has the functions of unbalance degree control, reactive compensation and harmonic current compensation, solves the electric energy quality problem mainly including negative sequence, and is suitable for rail transit power supply in various occasions.

Wu et al. (EEE TRANSACTIONS ON POWER ELECTRONICS, INSTITUTE OF ELECTRICAL AND ELECTRONICS ENGINEERS, USA, vol. 27, no. 2, 1 February 2012 (2012-02-01), pages 706-717, XP011391782 ) describe a negative sequence compensation system based on a novel two-phase three-wire converter to eliminate a negative sequence current for the high-speed railway traction power system with a three-phase V/V traction transformer. In this compensation system, the proposed two-phase three-wire converter is fed by two single-phase power sources formed with two step-down transformers connecting to the two feeder sections. The proposed converter contains three switch legs, one of which is connected to the common ground wire of two single-phase voltages. Hence, a switch leg is saved compared with two conventional single-phase converters, and the ratings of the power switches are not increased. In order to enhance the dynamic and steady-state performances of the compensation system, a compound control method composed of hysteresis control and dividing frequency control is presented. Simulation and experimental results are presented to demonstrate that the proposed compensator and its control strategy are very effective.

### Summary of the Invention

An object of the present invention is to provide an intelligent traction substation and a power flow control method therefor, which can effectively solve the following technical problems: (1) making the power flow of the traction substation controllable; (2) utilizing the generated power flow returned to the power grid from the traction network OCS that uses the two-way feeding power supply and the generated power flow generated by the braking of electric locomotives on the traction network, to make the generated power flow returned to the power grid satisfy the preset requirements; and (3) compensating the excessive negative sequence to make the negative sequence meet the national standards.

The present invention is achieved by the intelligent traction substation according to claim 1.

The feeder F includes a feeder F1 and a feeder F2, the traction network OCS includes a traction network OCS1 and a traction network OCS2, the traction bus TSB supplies power to the traction network OCS1 through the feeder F1, the traction bus TSB supplies power to the traction network OCS2 through the feeder F2, and an electrical section is arranged between the traction network OCS 1 and the traction network OCS2.

The feeder F1 is provided with a current transformer CT1, the feeder F2 is provided with a current transformer CT2, and the traction bus TSB is provided with a voltage transformer PT; measuring terminals of the current transformer CT1, the current transformer CT2 and the voltage transformer PT are all connected to an input terminal of the controller CC, and a control terminal of the controller CC is connected to a control terminal of the power flow control device PCD.

The control terminal of the power flow control device PCD includes a control terminal of the converter TPC, a control terminal of the converter PPC, a control terminal of the converter DPC, and a control terminal of the energy storage device ES.

The present invention also provides a power flow control method according to claim 6.

The controller CC calculates an active power flow P1 supplied by the traction bus TSB to the traction network OCS1 through the feeder F1 according to the voltage UT of the traction bus TSB and the current I1 of the feeder F1, and calculates an active power current P2 supplied by the traction bus TSB to the traction network OCS2 through the feeder F2 according to the voltage UT of the traction bus TSB and the current I2 of the feeder F2;
the controller CC controls the converter TPC and the converter PPC of the power flow control device PCD according to the active power flow P1 and the active power flow P2 to carry out negative sequence compensation on the traction transformer TT, such that the negative sequence meets national standards requirements; or, the controller CC controls the converter DPC or the energy storage device ES of the power flow control device PCD to utilize the total generated power flow returned to the traction substation from the traction network OCS1 and the traction network OCS2 to enable the generated power flow returned to the power grid to meet a preset requirement;
if P1+P2<0, the controller CC determines that the feeder F1 and the feeder F2 return the generated power flow to the power grid, and then controls the converter TPC and the converter DPC of the power flow control device PCD to work and supply power to the three-phase bus a, b, c of the power distribution system, or controls the energy storage device ES of the power flow control device PCD to perform charging, and the sum of the generated power flows of the power supply and charging is equal to |P1+P2|, so that the generated power flow returned to the power grid is equal to 0, which meets the preset requirements; at the same time, the controller CC controls the converter PPC in the power flow control device PCD to stand by;
if P1+P2>0, the controller CC determines that the feeder F1 and the feeder F2 are in a traction condition, and then controls the converter PPC and the converter TPC of the power flow control device PCD to carry out negative sequence compensation on the traction transformer TT, and controls the energy storage device ES in the power flow control device PCD to supply power to the traction bus TSB through the converter TPC, so that the negative sequence of the traction substation reaches the standard; at the same time, the controller CC controls the converter DPC in the power flow control device PCD to stand by;
if P1+P2=0, the controller CC determines that the feeder F1 and the feeder F2 are unloaded, and then controls the power flow control device PCD to stand by.

Compared with the prior art, the present invention has the following beneficial effects:
First, the intelligent traction substation is a power-flow-controllable substation. Here, a new structure is formed by providing a converter and an energy storage device. After judgment and control, the ride-through power flow, from the two-way feeding power supply, returned to the power grid and the regenerative power generated by the braking of electric locomotives on the traction network serve as the generated power flow for utlilization, so that the generated power flow returned to the power grid is 0 or can satisfy the preset requirements. Moreover, the excessive negative sequence is compensated such that the negative sequence meets the national standards.
Second, the generated power flow of the traction network is utilized under the condition of not changing the power supply structure of the power grid for the railway, thereby eliminating the negative impacts of the ride-through power flow on the power grid and users, and sufficently leveraging the advantages of the two-way feeding power supply.
Third, the implementation of the two-way feeding power supply between adjacent substations on the basis of co-phase power supply of the traction substation is more conducive to the utilization of regenerative energy of power supply arms and the improvement in the direct utilization rate of regenerative braking energy. Under normal circumstances, the regenerative power and electric energy returned to the power grid can be reduced to zero.
Fourth, the power flow control device can be connected to the energy storage device and the power distribution system of the traction substation for power supply. In addition to the ride-through power flow, the remaining regenerative braking electric energy can be utilized.
Fifth, the co-phase power supply and generated power flow utilization devices in the intelligent traction substation can be reused, thus effectively reducing equipment redundancy and investment.
Sixth, the technology is advanced, reliable, and easy to implement.

### Brief Description of Drawings

The accompanying drawings are provided to further facilitate the understanding of embodiments of the invention and constitute a part of this description, and together with the detailed description below, serve to explain, but not limit, the embodiments of the invention.
FIG. 1 is a structural schematic diagram of the present invention.
FIG. 2 is another structural schematic diagram of the present invention.
FIG. 3 is a connection schematic diagram of a control terminal of a power flow control device PCD of the present invention.
FIG. 4 is a flowchart of a control method of the present invention.

### Detailed Description of the Embodiments

In order for those skilled in the art to better understand the technical solutions of the present invention, the present invention will be further described with reference to the attached drawings and specific embodiments.

### Embodiment 1

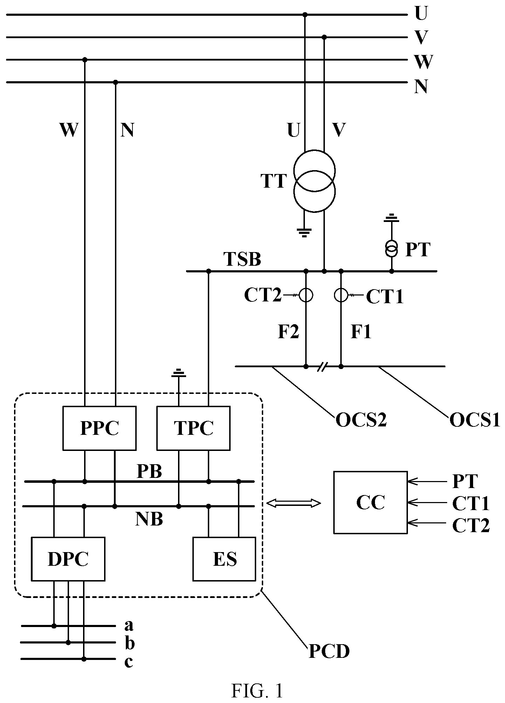

As shown in FIG. 1, this embodiment provides an intelligent traction substation, wherein the intelligent traction substation includes a traction transformer TT, and is provided with a power flow control device PCD and a controller CC. A primary side of the traction transformer TT is connected to a U phase and a V phase in a three-phase power grid; one end of a secondary side of the traction transformer TT is connected to a traction bus TSB, and the other end of the secondary side of the traction transformer TT is grounded. The traction bus TSB is connected, via a feeder F, to a traction network OCS that uses AC two-way feeding power supply. The controller CC is used for controlling, according to electric quantity information of the traction bus TSB and the feeder F, the power flow control device PCD to carry out negative sequence compensation on the traction transformer TT, such that the negative sequence meets national standards requirements. The controller CC is further used for controlling the power flow control device PCD to utilize the generated power flow returned to the traction substation from the traction network OCS that uses AC two-way feeding power supply to enable the generated power flow returned to the power grid to satisfy preset requirements.

In this embodiment, the power flow control device PCD is adopted to carry out negative sequence compensation on the traction transformer TT such that the negative sequence meets national standards, and thus, the intelligent traction substation provided by this embodiment can realize co-phase power supply, thereby eliminating the electrical phase separation within the substation. The traction network OCS adopts a two-wayfeeding system, so as to further eliminate the electrical phase separation with in the section between the two substations, thereby achieving full-line continuous power supply throughout the entire traction network can realize.

For a traction power supply system implementing two-way feeding power supply, there are two or more traction substations. For a specific intelligent traction substation as shown in FIG. 1, the power flow returned to the power grid from the intelligent traction substation is designated as a generated power flow. Because of the two-way feeding power supply, the ride-through power flow will appear on the traction network OCS, so the power flow control device PCD will utilize the ride-through power flow flowing from the intelligent traction substation to the power grid as the generated power flow. In actual situation, if the regenerative power generated during locomotive braking also flows to the power grid from the intelligent substation, or the regenerative power left because the regenerative power is not fully absorbed by the traction locomotive traveling together also flows to the power grid, the regenerative power or residual regenerative power flowing from the intelligent substation to the power grid and the ride-through power flow will be superimposed to be regarded as the total generated power flow by the controller CC. The controller CC will control the power flow control device PCD to utilize the total generated power flow so as to enable the generated power flow returned to the power grid to satisfy preset requirements, wherein the preset requirements can mean that the generated power flow returned to the power grid is controlled within a certain range or that the generated power flow returned to the power grid is zero. For a specific intelligent traction substation as shown in FIG. 1, if the power flow of the intelligent traction substation is in a traction state, because of the two-way feeding power supply, the ride-through power flow will appear on the traction network OCS, and the power flow control device PCD will carry out negative sequence compensation on the traction transformer TT, such that the negative sequence meets national standards. For a specific intelligent traction substation as shown in FIG. 1, if the power flow of the intelligent traction substation is zero, the power flow control device PCD stands by.

Under the condition of not changing the power supply structure of the power grid for the railway, this embodiment makes use of the generated power flow returned to the intelligent traction substation, effectively eliminating the negative impact of the ride-through power flow caused by the two-way feeding power supply and regenerative power on the power grid and users. Therefore, the advantages of the two-way feeding power supply are allowed to be fully leveraged. In addition, this embodiment uses the power flow control device PCD for negative sequence compensation and power generation flow utilization, thus realizing the reuse of co-phase power supply and generated power flow utilization devices in the intelligent traction substation, and effectively reducing equipment redundancy and investment.

In addition, it is mentioned in the background that a reactor needs to be connected in series to the secondary side of the traction transformer in the traction substation to reduce the equalizing current. This meansure is not mandatory in this embodiment, that is, this measure may or may not be adopted in this embodiment. The core of this embodiment lies in the utilization of the generated power flow returned to the substation. There is bound to be a ride-through power flow due to the use of the two-way feeding power supply. This embodiment focuses on handling the result caused by the occurrence of the ride-through power flow, rather than suppressing the generation of the ride-through power flow. This is a significant difference between this embodiment and the prior art.

Preferably, the feeder F includes a feeder F1 and a feeder F2, the traction network OCS includes a traction network OCS1 and a traction network OCS2, the traction bus TSB supplies power to the traction network OCS1 through the feeder F1, the traction bus TSB supplies power to the traction network OCS2 through the feeder F2, and an electrical section is arranged between the traction network OCS1 and the traction network OCS2.

In this embodiment, the intelligent substation adopts co-phase power supply technology and the traction network OCS adopts the two-way feeding power supply, so that the power supply arm is extended, and the traction train among the trains traveling together can absorb the regenerative power of the braking train with greater probability, so that the direct utilization rate of regenerative braking energy is improved, and the regenerative power finally returned to the power grid is greatly reduced, even to zero. For the convenience of maintenance, this embodiment can arrange an electric section at the traction network OCS of the substation, that is, between the traction network OCS1 and the traction network OCS2, and the electric section can be used in conjunction with the section measurement and control protection technology, so that the electric section enables the train to pass therethrough without power outage and is convenient to maintain.

Preferably, the feeder F1 is provided with a current transformer CT1, the feeder F2 is provided with a current transformer CT2, and the traction bus TSB is provided with a voltage transformer PT; the measuring terminals of the current transformer CT1, the current transformer CT2 and the voltage transformer PT are all connected to the input terminal of the controller CC, and the control terminal of the controller CC is connected to the control terminal of the power flow control device PCD.

Preferably, the power flow control device PCD in this embodiment includes a converter TPC, a converter PPC, a converter DPC, an energy storage device ES, a positive bus PB and a negative bus NB, wherein:
the converter TPC is a single-phase conversion system, and one end of an AC side of the converter TPC is connected to the traction bus TSB, and the other end of the AC side of the converter TPC is grounded;
the converter PPC is a single-phase conversion system, one end of an AC side of the converter PPC is directly connected to a W phase in the three-phase power grid, and the other end of the AC side of the converter PPC is connected to a neutral line N of the three-phase power grid; or, the other end of the AC side of the converter PPC is connected to a center tap O of a primary winding of the traction transformer TT;
the converter DPC is a three-phase conversion system, and an AC side of the converter DPC is connected to a three-phase bus a, b and c of a power distribution system of the traction substation, respectively;
the DC-side positive and negative poles of the converter PPC, the converter TPC, the converter DPC, and the energy storage device ES are connected to the positive bus PB and the negative bus NB, respectively.

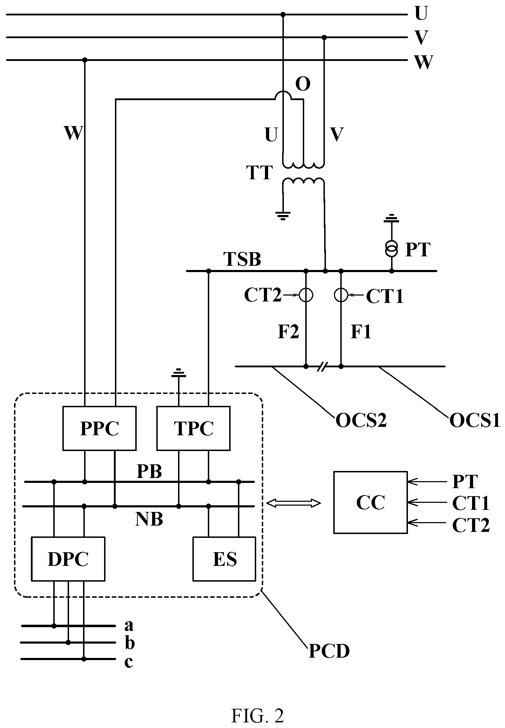

Here, as shown in FIG. 1, the three-phase power grid includes a U phase, a V phase and a W phase. The primary side of the traction transformer TT can be connected to the U phase and the V phase in the three-phase power grid, and one end of the AC side of the converter PPC is connected to the W phase in the three-phase power grid. The other end of the AC side of the converter PPC can be connected to the neutral line (that is, N line in FIG. 1) or be connected to the central tap O of the primary winding of the traction transformer TT as shown in FIG. 2.

Preferably, the control terminal of the power flow control device PCD includes a control terminal of the converter TPC, a control terminal of the converter PPC, a control terminal of the converter DPC, and a control terminal of the energy storage device ES.

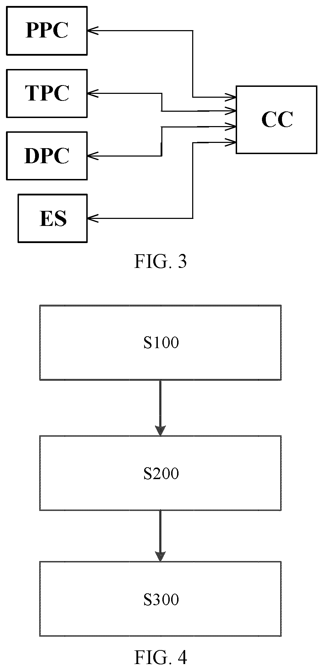

Here, as shown in FIG. 3, the control terminals of the converter TPC, the converter PPC, the converter DPC, and the energy storage device ES in the power flow control device PCD are all connected to the control terminal of the controller CC, i.e., the control terminal of the controller CC is connected to the control terminal of the power flow control device PCD.

In summary, the intelligent traction substation of the embodiment of the present invention has the following advantages:
First, the intelligent traction substation of the embodiment of the present invention is a power-flow-controllable substation. Here, a new structure is formed by providing a converter and an energy storage device. After judgment and control, the ride-through power flow, from two-way feeding power supply, returned to the power grid and the regenerative power generated by the braking of electric locomotives on the traction network serve as the generated power flow for utilization, so that the generated power flow returned to the power grid is 0 or can satisfy the preset requirements. Moreover, the excessive negative sequence is compensated such that the negative sequence meets the national standards.
Second, the generated power flow of the traction network is utilized under the condition of not changing the power supply structure of the power grid for the railway, thereby eliminating the negative impacts of the ride-through power flow on the power grid and users, and sufficently leveraging the advantages of the two-way feeding power supply.
Third, the implementation of the two-way feeding power supply between adjacent substations on the basis of co-phase power supply of the traction substation is more conducive to the utilization of regenerative energy of power supply arms and the improvement in the direct utilization rate of regenerative braking energy. Under normal circumstances, the regenerative power and electric energy returned to the power grid can be reduced to zero.
Fourth, the power flow control device can be connected to the energy storage device and the power distribution system of the traction substation for power supply. In addition to the ride-through power flow, the remaining regenerative braking electric energy can be utilized.
Fifth, the co-phase power supply and generated power flow utilization devices in the intelligent traction substation can be reused, thus effectively reducing equipment redundancy and investment.
Sixth, the technology is advanced, reliable, and easy to implement.

### Embodiment 2

As shown in FIG. 4, this embodiment provides a control method based on the intelligent traction substation provided by Embodiment 1, including:
Step S100: the voltage transformer PT detects the voltage UT of the traction bus TSB, and the current transformer CT1 and the current transformer CT2 detect the currents of the feeder F1 and the feeder F2, respectively;
Step S200: the controller CC calculates, according to the detected voltage value of the traction bus TSB and the detected current values of the feeder F1 and the feeder F2, active power flows supplied by the traction bus TSB to the traction network OCS1 and the traction network OCS2 through the feeder F1 and the feeder F2, respectively, wherein the active power flows flowing to the traction network OCS1 and the traction network OCS2 are positive, and the active power flows flowing to the traction bus TSB are negative;
Step S300: the controller CC, according to the active power flows, controls the converter TPC and the converter PPC of the power flow control device PCD to carry out negative sequence compensation on the traction transformer TT, such that the negative sequence meets national standards; or, the controller CC controls the converter DPC or the energy storage device ES of the power flow control device PCD to utilize the total generated power flow returned to the traction substation from the traction network OCS1 and the traction network OCS2 to enable the generated power flow returned to the power grid to satisfy preset requirements.

Preferably, in the control method:
the controller CC calculates an active power flow P1 supplied by the traction bus TSB to the traction network OCS1 through the feeder F1 according to the voltage UT of the traction bus TSB and the current I1 of the feeder F1, and calculates an active power current P2 supplied by the traction bus TSB to the traction network OCS2 through the feeder F2 according to the voltage UT of the traction bus TSB and the current I2 of the feeder F2;
the controller CC controls the converter TPC and the converter PPC of the power flow control device PCD according to the active power flow P1 and the active power flow P2 to carry out negative sequence compensation on the traction transformer TT, such that the negative sequence meets national standards; or, the controller CC controls the converter DPC or the energy storage device ES of the power flow control device PCD to utilize the total generated power flow returned to the traction substation from the traction network OCS1 and the traction network OCS2 to enable the generated power flow returned to the power grid to satisfy preset requirements.

Preferably, in the method:
if P1+P2<0, the controller CC determines that the feeder F1 and the feeder F2 return the generated power flow to the power grid, and then controls the converter TPC and the converter DPC of the power flow control device PCD to work and supply power to the three-phase bus a, b, c of the power distribution system, or controls the energy storage device ES of the power flow control device PCD to perform charging, and the sum of the generated power flows of the power supply and charging is equal to |P1+P2|, so that the generated power flow returned to the power grid is equal to 0, which satisfies the preset requirements; at the same time, the controller CC controls the converter PPC in the power flow control device PCD to stand by;
if P1+P2>0, the controller CC determines that the feeder F1 and the feeder F2 are in a traction condition, and then controls the converter PPC and the converter TPC of the power flow control device PCD to carry out negative sequence compensation on the traction transformer TT, and controls the energy storage device ES in the power flow control device PCD to supply power to the traction bus TSB through the converter TPC, so that the negative sequence of the traction substation reaches the standard; at the same time, the controller CC controls the converter DPC in the power flow control device PCD to stand by;
if P 1+P2=0, the controller CC determines that the feeder F1 and the feeder F2 are unloaded, and then controls the power flow control device PCD to stand by.

The above are only preferred embodiments of the present invention, and it should be noted that the above preferred embodiments should not be regarded as limiting the present invention which is defined by the appended claims.

## Claims

1. An intelligent traction substation, comprising a traction transformer TT, the intelligent traction substation is provided with a power flow control device PCD and a controller CC; a primary side of the traction transformer TT is connected to a U phase and a V phase in a three-phase power grid; one end of a secondary side of the traction transformer TT is connected to a traction bus TSB, and the other end of the secondary side of the traction transformer TT is grounded; the traction bus TSB is connected, via a feeder F, to a traction network OCS that uses AC two-way feeding power supply; the controller CC is used for controlling, according to electric quantity information of the traction bus TSB and the feeder F, the power flow control device PCD to carry out negative sequence compensation on the traction transformer TT, such that the negative sequence meets national standards; the controller CC is further used for controlling the power flow control device PCD to utilize, via power supply to a power distribution system or by energy storage means, generated power flow returned to the traction substation from the traction network OCS that uses the AC two-way feeding power supply to enable the generated power flow returned to the power grid to satisfy preset requirements;
**characterized in that**
the power flow control device PCD comprises a converter TPC, a converter PPC, a converter DPC, a positive bus PB and a negative bus NB, wherein:
the converter TPC is a single-phase conversion system, and one end of an AC side of the converter TPC is connected to the traction bus TSB, and the other end of the AC side of the converter TPC is grounded;
the converter PPC is a single-phase conversion system, one end of an AC side of the converter PPC is directly connected to a W phase in the three-phase power grid, and the other end of the AC side of the converter PPC is connected to a neutral line N of the three-phase power grid; or, the other end of the AC side of the converter PPC is connected to a center tap O of a primary winding of the traction transformer TT;
the converter DPC is a three-phase conversion system, and an AC side of the converter DPC is connected to a three-phase bus a, b and c of a power distribution system of the traction substation, respectively;
DC-side positive and negative poles of the converter PPC, the converter TPC, and the converter DPC are connected to the positive bus PB and the negative bus NB, respectively.

2. The intelligent traction substation according to claim 1, further comprising an energy storage device ES, wherein DC-side positive and negative poles of the energy storage device ES are connected to the positive bus PB and the negative bus NB, respectively.

3. The intelligent traction substation according to claim 2, wherein a control terminal of the power flow control device PCD comprises a control terminal of the converter TPC, a control terminal of the converter PPC, a control terminal of the converter DPC, and a control terminal of the energy storage device ES.

4. The intelligent traction substation according to claim 2 or 3, wherein the feeder F comprises a feeder F1 and a feeder F2, the traction network OCS comprises a traction network OCS1 and a traction network OCS2, the traction bus TSB supplies power to the traction network OCS1 through the feeder F1, the traction bus TSB supplies power to the traction network OCS2 through the feeder F2, and an electrical section is arranged between the traction network OCS1 and the traction network OCS2.

5. The intelligent traction substation according to claim 4, wherein the feeder F1 is provided with a current transformer CT1, the feeder F2 is provided with a current transformer CT2, and the traction bus TSB is provided with a voltage transformer PT; measuring terminals of the current transformer CT1, the current transformer CT2 and the voltage transformer PT are all connected to an input terminal of the controller CC, and a control terminal of the controller CC is connected to the control terminal of the power flow control device PCD.

6. A power flow control method based on the intelligent traction substation according to claim 5, comprising:
the voltage transformer PT detects a voltage UT of the traction bus TSB, and the current transformer CT1 and the current transformer CT2 detect currents of the feeder F1 and the feeder F2, respectively;
the controller CC calculates, according to the detected voltage of the traction bus TSB and the detected currents of the feeder F1 and the feeder F2, active power flows supplied by the traction bus TSB to the traction network OCS1 and the traction network OCS2 through the feeder F1 and the feeder F2, respectively, wherein the active power flows flowing to the traction network OCS1 and the traction network OCS2 are positive, and the active power flows flowing to the traction bus TSB are negative;
the controller CC, according to the active power flows, controls the converter TPC and the converter PPC of the power flow control device PCD to carry out negative sequence compensation on the traction transformer TT, such that the negative sequence meets national standards; or, the controller CC controls the converter DPC or the energy storage device ES of the power flow control device PCD to utilize a total generated power flow returned to the traction substation from the traction network OCS1 and the traction network OCS2 to enable the generated power flow returned to the power grid to satisfy preset requirements.

7. The power flow control method according to claim 6, wherein the controller CC calculates an active power flow P1 supplied by the traction bus TSB to the traction network OCS1 through the feeder F1 according to the voltage UT of the traction bus TSB and the current I1 of the feeder F1, and calculates an active power current P2 supplied by the traction bus TSB to the traction network OCS2 through the feeder F2 according to the voltage UT of the traction bus TSB and the current I2 of the feeder F2;
the controller CC controls the converter TPC and the converter PPC of the power flow control device PCD according to the active power flow P1 and the active power flow P2 to carry out negative sequence compensation on the traction transformer TT, such that the negative sequence meets national standards; or, the controller CC controls the converter DPC or the energy storage device ES of the power flow control device PCD to utilize the total generated power flow returned to the traction substation from the traction network OCS1 and the traction network OCS2 to enable the generated power flow returned to the power grid to satisfy preset requirements.

8. The power flow control method according to claim 7, further comprising:
if P1+P2<0, the controller CC determines that the feeder F1 and the feeder F2 return the generated power flow to the power grid, and then controls the converter TPC and the converter DPC of the power flow control device PCD to work and supply power to the three-phase bus a, b, c of the power distribution system, or controls the energy storage device ES of the power flow control device PCD to perform charging, and the sum of the generated power flows of the power supply and charging is equal to |P1+P2|, so that the generated power flow returned to the power grid is equal to 0, which satisfies the preset requirements; at the same time, the controller CC controls the converter PPC in the power flow control device PCD to stand by;
if P1+P2>0, the controller CC determines that the feeder F1 and the feeder F2 are in a traction condition, and then controls the converter PPC and the converter TPC of the power flow control device PCD to carry out negative sequence compensation on the traction transformer TT, and controls the energy storage device ES to supply power to the traction bus TSB through the converter TPC, so that the negative sequence of the traction substation reaches the standard; at the same time, the controller CC controls the converter DPC in the power flow control device PCD to stand by;
if P1+P2=0, the controller CC determines that the feeder F1 and the feeder F2 are unloaded, and then controls the power flow control device PCD to stand by.

## Patentansprüche

1. Intelligentes Bahnstromunterwerk, das einen Bahnstromwandler TT umfasst, wobei das intelligente Bahnstromunterwerk mit einem Stromflussregler PCD und einem Regler CC versehen ist, wobei eine Primärseite des Bahnstromwandlers TT mit einer U-Phase und einer V-Phase eines dreiphasigen Stromnetzes verbunden ist, wobei das eine Ende einer Sekundärseite des Bahnstromwandlers TT mit einem Bahnstrombus TSB verbunden ist, wobei das andere Ende der Sekundärseite des Bahnstromwandlers TT geerdet ist, wobei der Bahnstrombus TSB über eine Zuführung F mit einem Bahnstromnetz OCS verbunden ist, das eine bidirektionale Wechselstromversorgung nutzt, wobei der Regler CC dazu dient, den Stromflussregler PCD anhand der Elektrikgrößendaten des Bahnstrombusses TSB und der Zuführung F so zu regeln, dass er einen Gegensystemausgleich des Bahnstromwandlers TT vornimmt, sodass das Gegensystem nationalen Normen entspricht, wobei der Regler CC ferner dazu dient, den Stromflussregler PCD so zu regeln, dass er einen von dem die bidirektionale Wechselstromversorgung nutzenden Bahnstromnetz OCS in das Bahnstromunterwerk zurückgeführten erzeugten Stromfluss über eine Stromversorgung in ein Stromverteilungssystem oder durch einen Energiespeicher nutzt, um zu ermöglichen, dass der in das Stromnetz zurückgeführte erzeugte Stromfluss gewissen Vorgaben entspricht,
**dadurch gekennzeichnet, dass**
der Stromflussregler PCD einen Richter TPC, einen Richter PPC, einen Richter DPC, einen positiven Bus PB und einen negativen Bus NB umfasst,
wobei der Richter TPC ein einphasiges Richtsystem ist, wobei das eine Ende einer Wechselstromseite des Richters TPC mit dem Bahnstrombus TSB verbunden ist, wobei das andere Ende der Wechselstromseite des Richters TPC geerdet ist,
wobei der Richter PPC ein einphasiges Richtsystem ist, wobei das eine Ende einer Wechselstromseite des Richters PPC unmittelbar mit einer W-Phase des dreiphasigen Stromnetzes verbunden ist, wobei das andere Ende der Wechselstromseite des Richters PPC mit einem Nullleiter N des dreiphasigen Stromnetzes oder mit einem Mittelabgriff O einer Primärwicklung des Bahnstromwandlers TT verbunden ist,
wobei der Richter DPC ein dreiphasiges Richtsystem ist, wobei eine Wechselstromseite des Richters DPC jeweils mit einem dreiphasigen Bus a, b und c eines Stromverteilungssystems des Bahnstromunterwerks verbunden ist,
wobei der gleichstromseitige positive bzw. negative Pol des Richters PPC, des Richters TPC und des Richters DPC mit dem positiven Bus PB bzw. dem negativen Bus NB verbunden ist.

2. Intelligentes Bahnstromunterwerk nach Anspruch 1, das ferner einen Energiespeicher ES umfasst, wobei der gleichstromseitige positive bzw. negative Pol des Energiespeichers ES mit dem positiven Bus PB bzw. dem negativen Bus NB verbunden ist.

3. Intelligentes Bahnstromunterwerk nach Anspruch 2, wobei ein Regelanschluss des Stromflussreglers PCD einen Regelanschluss des Richters TPC, einen Regelanschluss des Richters PPC, einen Regelanschluss des Richters DPC und einen Regelanschluss des Energiespeichers ES umfasst.

4. Intelligentes Bahnstromunterwerk nach Anspruch 2 oder 3, wobei die Zuführung F eine Zuführung F1 und eine Zuführung F2 umfasst, wobei das Bahnstromnetz OCS ein Bahnstromnetz OCS1 und ein Bahnstromnetz OCS2 umfasst, wobei der Bahnstrombus TSB das Bahnstromnetz OCS1 über die Zuführung F1 mit Strom versorgt, wobei der Bahnstrombus TSB das Bahnstromnetz OCS2 über die Zuführung F2 mit Strom versorgt, wobei ein Elektrikabschnitt zwischen dem Bahnstromnetz OCS1 und dem Bahnstromnetz OCS2 angeordnet ist.

5. Intelligentes Bahnstromunterwerk nach Anspruch 4, wobei die Zuführung F1 mit einem Stromwandler CT1 vorgesehen ist, wobei die Zuführung F2 mit einem Stromwandler CT2 vorgesehen ist, wobei der Bahnstrombus TSB mit einem Spannungswandler PT vorgesehen ist, wobei Messanschlüsse des Stromwandlers CT1, des Stromwandlers CT2 und des Spannungswandlers PT alle mit einem Eingangsanschluss des Reglers CC verbunden sind, wobei ein Regelanschluss des Reglers CC mit dem Regelanschluss des Stromflussreglers PCD verbunden ist.

6. Stromflussregelverfahren, das auf dem intelligenten Bahnstromunterwerk nach Anspruch 5 beruht, bei dem:
der Spannungswandler PT eine Spannung UT des Bahnstrombusses TSB ermittelt, wobei der Stromwandler CT1 bzw. der Stromwandler CT2 einen Strom der Zuführung F1 bzw. der Zuführung F2 ermittelt,
der Regler CC anhand der ermittelten Spannung des Bahnstrombusses TSB und des ermittelten Stroms der Zuführung F1 bzw. der Zuführung F2 einen Wirkstromfluss berechnet, mit dem der Bahnstrombus TSB das Bahnstromnetz OCS1 über die Zuführung F1 bzw. das Bahnstromnetz OCS2 über die Zuführung F2 versorgt, wobei der in das Bahnstromnetz OCS1 bzw. das Bahnstromnetz OCS2 fließende Wirkstromfluss positiv ist, wobei der in den Bahnstrombus TSB fließende Wirkstromfluss negativ ist,
der Regler CC anhand des Wirkstromflusses den Richter TPC und den Richter PPC des Stromflussreglers PCD so regelt, dass sie einen Gegensystemausgleich des Bahnstromwandlers TT vornehmen, sodass das Gegensystem nationalen Normen entspricht, oder den Richter DPC oder den Energiespeicher ES des Stromflussreglers PCD so regelt, dass er einen von dem Bahnstromnetz OCS1 und dem Bahnstromnetz OCS2 in das Bahnstromunterwerk zurückgeführten erzeugten Gesamtstromfluss nutzt, um zu ermöglichen, dass der in das Stromnetz zurückgeführte erzeugte Stromfluss gewissen Vorgaben entspricht.

7. Stromflussregelverfahren nach Anspruch 6, wobei der Regler CC anhand der Spannung UT des Bahnstrombusses TSB und des Stroms I1 der Zuführung F1 einen Wirkstromfluss P1, mit dem der Bahnstrombus TSB das Bahnstromnetz OCS1 über die Zuführung F1 versorgt, und anhand der Spannung UT des Bahnstrombusses TSB und des Stroms I2 der Zuführung F2 einen Wirkstromfluss P2, mit dem der Bahnstrombus TSB das Bahnstromnetz OCS2 über die Zuführung F2 versorgt, berechnet,
wobei der Regler CC anhand des Wirkstromflusses P1 und des Wirkstromflusses P2 den Richter TPC und den Richter PPC des Stromflussreglers PCD so regelt, dass sie einen Gegensystemausgleich des Bahnstromwandlers TT vornehmen, sodass das Gegensystem den nationalen Normen entspricht, oder den Richter DPC oder den Energiespeicher ES des Stromflussreglers PCD so regelt, dass er den von dem Bahnstromnetz OCS1 und dem Bahnstromnetz OCS2 in das Bahnstromunterwerk zurückgeführten erzeugten Gesamtstromfluss nutzt, um zu ermöglichen, dass der in das Stromnetz zurückgeführte erzeugte Stromfluss gewissen Vorgaben entspricht.

8. Stromflussregelverfahren nach Anspruch 7, bei dem ferner:
bei P1 + P2 < 0 der Regler CC bestimmt, dass die Zuführung F1 und die Zuführung F2 den erzeugten Stromfluss in das Stromnetz zurückführen, und anschließend den Richter TPC und den Richter DPC des Stromflussreglers PCD so regelt, dass sie in Betrieb genommen werden und den dreiphasigen Bus a, b, c des Stromverteilungssystems mit Strom versorgen, oder den Energiespeicher ES des Stromflussreglers PCD so regelt, dass er einen Aufladevorgang durchführt, wobei die Summe des erzeugten Stromflusses der Stromversorgung und des Aufladevorgangs gleich |P1 + P2| ist, sodass der in das Stromnetz zurückgeführte erzeugte Stromfluss gleich 0 ist, was den gewissen Vorgaben entspricht, wobei der Regler CC gleichzeitig den Richter PPC des Stromflussreglers PCD so regelt, dass er sich im Bereitschaftsmodus befindet,
bei P1 + P2 > 0 der Regler CC bestimmt, dass sich die Zuführung F1 und die Zuführung F2 im Bahnstromzustand befinden, und anschließend den Richter PPC und den Richter TPC des Stromflussreglers PCD so regelt, dass sie einen Gegensystemausgleich des Bahnstromwandlers TT vornehmen, und den Energiespeicher ES so regelt, dass er über den Richter TPC den Bahnstrombus TSB mit Strom versorgt, sodass das Gegensystem des Bahnstromunterwerks der Norm entspricht, wobei der Regler CC gleichzeitig den Richter DPC des Stromflussreglers PCD so regelt, dass er sich im Bereitschaftsmodus befindet,
bei P1 + P2 = 0 der Regler CC bestimmt, dass sich die Zuführung F1 und die Zuführung F2 im Leerlaufzustand befinden, und anschließend den Stromflussregler PCD so rergelt, dass er sich im Bereitschaftsmodus befindet.

## Revendications

1. Sous-station de traction intelligente, comprenant un transformateur de traction TT, la sous-station de traction intelligente étant équipée d'un dispositif de commande de flux électrique PCD et d'un dispositif de commande CC, un côté primaire du transformateur de traction TT étant relié à une phase U et à une phase V d'un réseau électrique triphasé, l'une extrémité d'un côté secondaire du transformateur de traction TT étant reliée à un bus de traction TSB, l'autre extrémité du côté secondaire du transformateur de traction TT étant mise à la terre, le bus de traction TSB étant relié via un alimenteur F à un réseau de traction OCS utilisant une alimentation électrique bidirectionnelle à courant alternatif, le dispositif de commande CC étant utilisé pour commander, en fonction d'informations de quantité électrique du bus de traction TSB et de l'alimenteur F, le dispositif de commande de flux électrique PCD de sorte qu'il effectue une compensation de système équilibré inverse du transformateur de traction TT, de sorte que le système équilibré inverse conforme à des normes nationales, le dispositif de commande CC étant également utilisé pour commander le dispositif de commande de flux électrique PCD de sorte qu'il utilise, via une alimentation électrique d'un système de distribution électrique ou par un dispositif de stockage d'énergie, un flux électrique généré renvoyé vers la sous-station de traction depuis le réseau de traction OCS utilisant l'alimentation électrique bidirectionnelle à courant alternatif afin de permettre au flux électrique généré renvoyé vers le réseau électrique de satisfaire à des exigences prédéfinies,
**caractérisée en ce que**
le dispositif de commande de flux électrique PCD comprend un convertisseur TPC, un convertisseur PPC, un convertisseur DPC, un bus positif PB et un bus négatif NB,
le convertisseur TPC étant un système de conversion monophasé, l'une extrémité d'un côté à courant alternatif du convertisseur TPC étant reliée au bus de traction TSB, l'autre extrémité du côté à courant alternatif du convertisseur TPC étant mise à la terre,
le convertisseur PPC étant un système de conversion monophasé, l'une extrémité d'un côté à courant alternatif du convertisseur PPC étant directement reliée à une phase W du réseau électrique triphasé, l'autre extrémité du côté à courant alternatif du convertisseur PPC étant reliée à un fil neutre N du réseau électrique triphasé, ou l'autre extrémité du côté à courant alternatif du convertisseur PPC étant reliée à une prise médiane O d'un enroulement primaire du transformateur de traction TT,
le convertisseur DPC étant un système de conversion triphasé, un côté à courant alternatif du convertisseur DPC étant relié respectivement à un bus triphasé a, b et c d'un système de distribution électrique de la sous-station de traction,
un pôle positif et un pôle négatif sur le côté à courant continu du convertisseur PPC, du convertisseur TPC et du convertisseur DPC étant respectivement reliés au bus positif PB et au bus négatif NB.

2. Sous-station de traction intelligente selon la revendication 1, comprenant en outre un dispositif de stockage d'énergie ES, un pôle positif et un pôle négatif sur le côté à courant continu du dispositif de stockage d'énergie ES étant respectivement reliés au bus positif PB et au bus négatif NB.

3. Sous-station de traction intelligente selon la revendication 2, dans laquelle une borne de commande du dispositif de commande de flux électrique PCD comprend une borne de commande du convertisseur TPC, une borne de commande du convertisseur PPC, une borne de commande du convertisseur DPC et une borne de commande du dispositif de stockage d'énergie ES.

4. Sous-station de traction intelligente selon la revendication 2 ou 3, dans laquelle l'alimenteur F comprend un alimenteur F1 et un alimenteur F2, le réseau de traction OCS comprenant un réseau de traction OCS1 et un réseau de traction OCS2, le bus de traction TSB alimentant en énergie électrique le réseau de traction OCS1 via l'alimenteur F1, le bus de traction TSB alimentant en énergie électrique le réseau de traction OCS2 via l'alimenteur F2, une section électrique étant disposée entre le réseau de traction OCS1 et le réseau de traction OCS2.

5. Sous-station de traction intelligente selon la revendication 4, dans laquelle l'alimenteur F1 est équipé d'un transformateur de courant CT1, l'alimenteur F2 étant équipé d'un transformateur de courant CT2, le bus de traction TSB étant équipé d'un transformateur de tension PT, des bornes de mesure du transformateur de courant CT1, du transformateur de courant CT2 et du transformateur de tension PT étant toutes reliées à une borne d'entrée du dispositif de commande CC, une borne de commande du dispositif de commande CC étant reliée à la borne de commande du dispositif de commande de flux électrique PCD.

6. Procédé de commande de flux électrique basé sur la sous-station de traction intelligente selon la revendication 5, dans lequel
le transformateur de tension PT détecte une tension UT du bus de traction TSB, le transformateur de courant CT1 détectant un courant de l'alimenteur F1, le transformateur de courant CT2 détectant un courant de l'alimenteur F2,
le dispositif de commande CC calculant, en fonction de la tension détectée du bus de traction TSB et du courant détecté de l'alimenteur F1 et du courant détecté de l'alimenteur F2, un flux électrique actif fourni par le bus de traction TSB via l'alimenteur F1 au réseau de traction OCS1 et via l'alimenteur F2 au réseau de traction OCS2, le flux électrique actif circulant vers le réseau de traction OCS1 et vers le réseau de traction OCS2 étant positif, le flux électrique actif circulant vers le bus de traction TSB étant négatif,
le dispositif de commande CC commandant, en fonction du flux électrique actif, le convertisseur TPC et le convertisseur PPC du dispositif de commande de flux électrique PCD de sorte qu'ils effectuent une compensation de système équilibré inverse du transformateur de traction TT, de sorte que le système équilibré inverse conforme à des normes nationales, ou le dispositif de commande CC commandant le convertisseur DPC ou le dispositif de stockage d'énergie ES du dispositif de commande de flux électrique PCD de sorte qu'il utilise un flux électrique généré total renvoyé vers la sous-station de traction depuis le réseau de traction OCS1 et le réseau de traction OCS2 afin de permettre au flux électrique généré renvoyé vers le réseau électrique de satisfaire à des exigences prédéfinies.

7. Procédé de commande de flux électrique selon la revendication 6, dans lequel le dispositif de commande CC calcule, en fonction de la tension UT du bus de traction TSB et du courant I1 de l'alimenteur F1, un flux électrique actif P1 fourni par le bus de traction TSB via l'alimenteur F1 au réseau de traction OCS1 et calcule, en fonction de la tension UT du bus de traction TSB et du courant I2 de l'alimenteur F2, un flux électrique actif P2 fourni par le bus de traction TSB via l'alimenteur F2 au réseau de traction OCS2,
le dispositif de commande CC commandant, en fonction du flux électrique actif P1 et du flux électrique actif P2, le convertisseur TPC et le convertisseur PPC du dispositif de commande de flux électrique PCD de sorte qu'ils effectuent une compensation de système équilibré inverse du transformateur de traction TT, de sorte que le système équilibré inverse conforme à des normes nationales, ou le dispositif de commande CC commandant le convertisseur DPC ou le dispositif de stockage d'énergie ES du dispositif de commande de flux électrique PCD de sorte qu'il utilise le flux électrique généré total renvoyé vers la sous-station de traction depuis le réseau de traction OCS1 et le réseau de traction OCS2 afin de permettre au flux électrique généré renvoyé vers le réseau électrique de satisfaire à des exigences prédéfinies.

8. Procédé de commande de flux électrique selon la revendication 7, dans lequel en outre
si P1 + P2 < 0, le dispositif de commande CC détermine que l'alimenteur F1 et l'alimenteur F2 renvoient le flux électrique généré au réseau électrique, puis commande le convertisseur TPC et le convertisseur DPC du dispositif de commande de flux électrique PCD de sorte qu'ils fonctionnent et alimentent en énergie électrique le bus triphasé a, b, c du système de distribution électrique ou commande le dispositif de stockage d'énergie ES du dispositif de commande de flux électrique PCD de sorte qu'il effectue une recharge, la somme du flux électrique généré de l'alimentation électrique et de la recharge étant égale à | P1 + P2 |, de sorte que le flux électrique généré renvoyé au réseau électrique est égal à 0, ce qui satisfait aux exigences prédéfinies, le dispositif de commande CC commandant simultanément le convertisseur PPC du dispositif de commande de flux électrique PCD de sorte qu'il est en veille,
si P1 + P2 > 0, le dispositif de commande CC détermine que l'alimenteur F1 et l'alimenteur F2 sont en condition de traction, puis commande le convertisseur PPC et le convertisseur TPC du dispositif de commande de flux électrique PCD de sorte qu'ils effectuent une compensation de système équilibré inverse du transformateur de traction TT et commande le dispositif de stockage d'énergie ES de sorte qu'il alimente en énergie électrique le bus de traction TSB via le convertisseur TPC, de sorte que le système équilibré inverse conforme à la norme, le dispositif de commande CC commandant simultanément le convertisseur DPC du dispositif de commande de flux électrique PCD de sorte qu'il est en veille,
si P1 + P2 = 0, le dispositif de commande CC détermine que l'alimenteur F1 et l'alimenteur F2 sont en condition hors charge, puis commande le dispositif de commande de flux électrique PCD de sorte qu'il est en veille.
